# EUROPEAN PATENT APPLICATION

(11) **EP 4 726 917 A1**
(43) Date of publication of application: **15.04.2026**
(21) Application number: 23940792.7
(22) Date of filing: 22.12.2023
(51) Int. Cl.: H01Q 1/27, F16L 11/133, G06K 7/10, H01Q 13/08, H01Q 19/10, H01Q 21/06

(54) **DRONE COMPRISING COMMUNICATION ANTENNA, AND MONITORING SYSTEM AND MONITORING METHOD USING SAID DRONE**

(30) Priority: 09.06.2023 JP 2023095768
(71) Applicant: The Yokohama Rubber Co., Ltd., Hiratsuka-shi, Kanagawa 254-8601 (JP)
(72) Inventor: ISHIBASHI Yusuke, Hiratsuka-shi, Kanagawa 254-8601 (JP)
(74) Representative: Grünecker Patent- und Rechtsanwälte PartG mbB
(86) International application number: PCT/JP2023/046168
(87) International publication number: WO 2024/252699

(57) **Abstract**

Provided are a drone equipped with a lightweight antenna capable of maintaining better wireless communication with a passive IC tag installed on an object to be monitored, and a monitoring system and a monitoring method using the drone. An antenna 7 that constitutes a communication unit 6 is a two-element patch antenna in which two antenna elements 8 are arranged side by side on a lower surface of a reflector 9, and the reflector 9 and each of the antenna elements 8 are formed from an aluminum alloy plate having a thickness of 3 mm or less. The reflector 9 is installed on the drone 1 such that a camera through hole 9a formed between each of the antenna elements 8 at the center of the reflector 9 is located at the center of the drone 1 in a plan view, and in a field of view of the drone 1 as viewed from directly below, the reflector 9 and each of the antenna elements 8 are visible, and a camera device 5 disposed above the reflector 9 acquires image data below the drone 1 through the camera through hole 9a.

## Description

### Technical Field

The present invention relates to a drone equipped with an antenna for communicating with a passive IC tag installed on an object to be monitored, and a monitoring system and a monitoring method using the drone.

### Background art

A monitoring system has been proposed that uses a communication unit mounted on a drone to acquire pressure data in a marine hose from a passive IC tag installed on the marine hose, and determines whether there is a fluid leak based on this pressure data (see, for example, Patent Document 1). A wireless communication distance between a passive IC tag and a communication unit is generally 2 m or less. Therefore, when performing this wireless communication, the drone needs to be positioned at an upper position close to the IC tag and hover such that an antenna of the communication unit is within, for example, 2 m of the IC tag. Accordingly, it is desirable to install the antenna as low as possible relative to the drone, and it is also desirable for the antenna specifications to enable a large wireless communication distance with the IC tag.

A drone operator refers to image data captured by the camera device mounted on the drone and positions the drone at an upper position close to the IC tag. Therefore, it is necessary that the antenna mounted on the drone is not present at a position that interferes with the camera device acquiring image data. It is also necessary to ensure that the presence of the camera device does not adversely affect wireless communication between the antenna and the IC tag. Furthermore, even though the antenna specifications allow for a large wireless communication distance with the IC tag, the weight of the antenna increases, which increases the load on the drone, shortening the maximum flight time. Therefore, there is room for improvement in reducing the weight of the antenna mounted on the drone while maintaining good wireless communication between the antenna and the IC tag and more reliably acquiring monitoring data from the IC tag. Furthermore, monitoring based on data acquired from passive IC tags using a communication unit mounted on a drone in this manner can be applied to other objects to be monitored, not limited to marine hoses.

### Citation List

### Patent Literature

Patent Document 1: JP 2021-46929 A

### Summary of Invention

### Technical Problem

An object of the present invention is to provide a drone equipped with a lightweight antenna capable of maintaining better wireless communication with a passive IC tag installed on an object to be monitored, and a monitoring system and a monitoring method using the drone.

### Solution to Problem

In order to achieve the above object, a drone according to the present invention is a drone equipped with a camera device and a communication unit equipped with an antenna used for wireless communication with a passive IC tag installed on an object to be monitored, in which the antenna is a two-element patch antenna having a reflector and two antenna elements, the antenna elements being plate-shaped and arranged side by side at an interval on a lower surface of the reflector, the reflector and each of the antenna elements are formed from an aluminum alloy plate having a thickness of 3 mm or less, a camera through hole is formed at a position corresponding to between each of the antenna elements at a center of the reflector, the reflector is installed on the drone such that the camera through hole is located at a center of the drone in a plan view, and the reflector and each of the antenna elements are visible in a field of view of the drone as viewed from directly below, and the camera device is disposed above the reflector, and image data below the drone is acquired by the camera device through the camera through hole.

A monitoring system according the present invention is a monitoring system for an object to be monitored, including: the above-described drone; the IC tag installed on the object to be monitored; and a computing device to which monitoring data acquired by the communication unit from the IC tag via wireless communication is input, the IC tag stores detection data by a sensor unit that detects a state of the object to be monitored, the detection data acquired by the communication unit from the IC tag via wireless communication is used as the monitoring data, and the computing device determines the state of the object to be monitored based on the monitoring data.

A monitoring method according to the present invention is a monitoring method for an object to be monitored using the above-described drone, the IC tag installed on the object to be monitored, and a computing device to which monitoring data acquired by the communication unit from the IC tag via wireless communication is input, the monitoring method including: detecting a state of the object to be monitored by a sensor unit installed on the object to be monitored; storing detection data by the sensor unit in the IC tag; acquiring the detection data by the communication unit from the IC tag via wireless communication; and determining the state of the object to be monitored by the computing device based on the monitoring data by using the detection data as the monitoring data.

### Advantageous Effects of Invention

According to the drone of the present invention, a two-element patch antenna is employed as the antenna that constitutes the communication unit mounted on the drone, and the reflector and each of the antenna elements are formed from an aluminum alloy plate having a thickness of 3 mm or less, making it easier to increase a wireless communication distance with the IC tag while reducing the weight of the antenna. Furthermore, in the field of view of the drone as viewed from directly below, the reflector and each of the antenna elements are visible, and therefore the antenna can communicate wirelessly with the IC tag without being obstructed by the camera device or other parts of the communication unit.

The camera through hole formed at a position corresponding to between each of the antenna elements at the center of the reflector is located at the center of the drone in a plan view. Since the camera device disposed above the reflector acquires image data below the drone through the camera through hole, a drone operator refers to this image data and thereby has an advantage in accurately positioning the drone at an upper position close to the IC tag and hovering the drone. As a result, it is possible to maintain better wireless communication between the IC tag and the antenna, which is advantageous for more reliably acquiring data indicating the state of the object to be monitored from the IC tag.

According to the monitoring system and the monitoring method of the present invention, wireless communication between the IC tag and the antenna can be maintained in a better state, and therefore the monitoring data stored in the IC tag can be acquired more reliably. This is advantageous for ascertaining the state of the object to be monitored with high accuracy. Furthermore, since the lightweight drone is used, the maximum flight time of the drone per flight is increased, which is advantageous for quickly performing monitoring work.

### Brief Description of Drawings

FIG. 1 is an explanatory diagram illustrating an embodiment of a drone in a front view.
FIG. 2 is an explanatory diagram illustrating the drone of FIG. 1 in a plan view.
FIG. 3 is an explanatory diagram illustrating a camera device and an antenna in a cross-sectional view taken along line A-A in FIG. 1.
FIG. 4 is an explanatory diagram illustrating the antenna of FIG. 3 in a bottom view.
FIG. 5 is a cross-sectional view taken along line B-B in FIG. 3.
FIG. 6 is an explanatory diagram illustrating an embodiment of a monitoring system.
FIG. 7 is an explanatory diagram illustrating a portion of a marine hose in FIG. 6 in an enlarged longitudinal sectional view.
FIG. 8 is an explanatory diagram illustrating a portion of the marine hose in a cross-sectional view taken along line C-C in FIG. 7.
FIG. 9 is an explanatory diagram illustrating a periphery of an IC tag in FIG. 7 in an enlarged longitudinal sectional view.
FIG. 10 is an explanatory diagram illustrating a schematic configuration of a monitoring system in which a computing device and terminal devices are connected via a communication network.
FIG. 11 is an explanatory diagram illustrating another embodiment of the monitoring system in an enlarged longitudinal sectional view of a portion of a marine hose.
FIG. 12 is an explanatory diagram illustrating a portion of the marine hose in a cross-sectional view taken along line D-D in FIG. 11.

### Description of Embodiments

Hereinafter, a drone of the present invention and a monitoring system and a monitoring method using the drone will be described based on embodiments shown in the drawings.

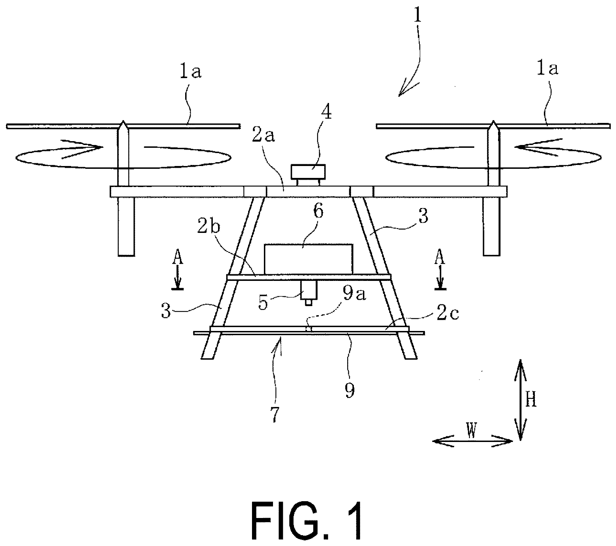

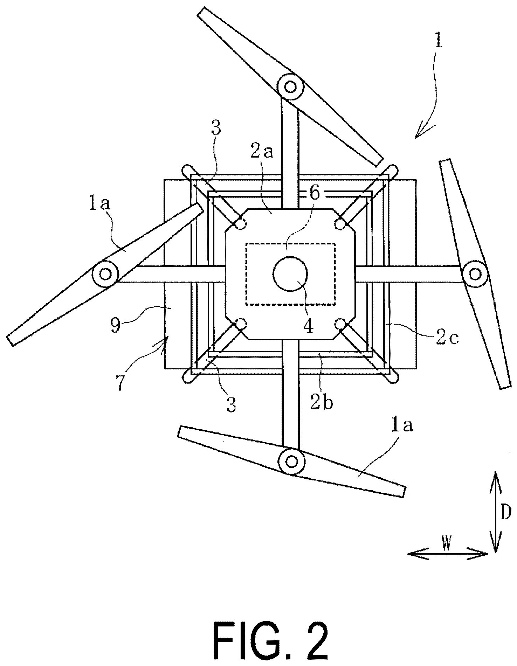

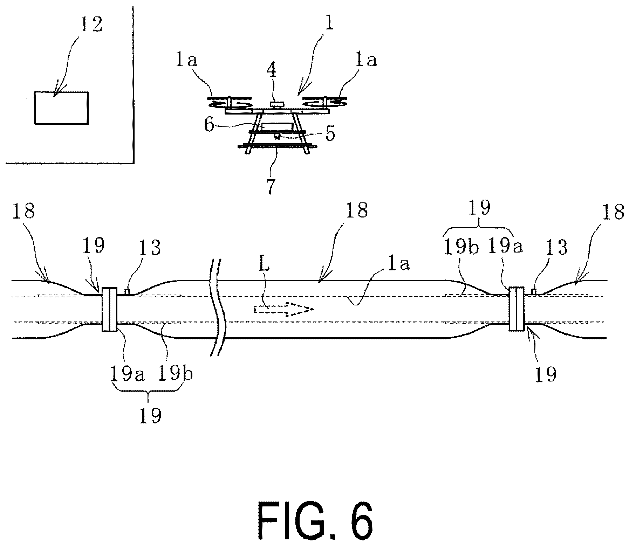

An embodiment of a drone 1 illustrated in FIGS. 1 and 2 is used to ascertain states of various objects to be monitored. Arrows W, D, and H in the drawing indicate a width direction, a depth direction, and a height direction of the drone 1, respectively. The object to be monitored is, for example, a floating marine hose 18 shown in FIG. 6, which is used while floating on the water surface. A communication unit 6 mounted on the drone 1 wirelessly communicates with a passive type 3 installed on the marine hose 18.

Radio waves (R1, R2) used in this wireless communication are right-handed circularly polarized waves. The frequency of these radio waves (R1, R2) is mainly in the UHF band (range of 860 MHz to 930 MHz, which varies by country; in Japan, 915 MHz to 930 MHz), and the HF band (13.56 MHz) is sometimes used.

As illustrated in FIGS. 1 and 2, the drone 1 has a plurality of propellers 1a, support bodies 2a, 2b, and 2c disposed at intervals above and below, and four leg portions 3. A frame structure is constructed by the support bodies 2a, 2b, and 2c and the leg portions 3, and one propeller 1a is installed on each arm extending from the uppermost support body 2a. The drone 1 is not limited to the structure illustrated in this embodiment, and various known structures can be employed.

This drone 1 is equipped with a GNSS receiver 4, a camera device 5, and the communication unit 6. Various known specifications can be used for the GNSS receiver 4. Various known digital cameras capable of acquiring image data of still images or moving images can be used for the camera device 5. Currently, since very small and lightweight camera devices 5 are commercially available, such a camera device 5 may be employed. Various known specifications capable of wirelessly communicating with a passive RFID tag can be used for the communication unit 6. The drone 1 is also equipped with an altimeter and a battery to power the onboard equipment.

The GNSS receiver 4 is installed on the uppermost support body 2a and is disposed at the center of the drone 1 in a plan view. The main bodies of the camera device 5 and the communication unit 6 are installed on the middle support body 2b. The camera device 5 is disposed at the center of the drone 1 in a plan view. The imaging lens of the camera device 5 faces downward. An antenna 7 constituting the communication unit 6 is installed on the lowest support body 2c. The antenna 7 and the main body of the communication unit 6 are connected by a cable. The antenna 7 is fixed to the drone 1 via an insulator.

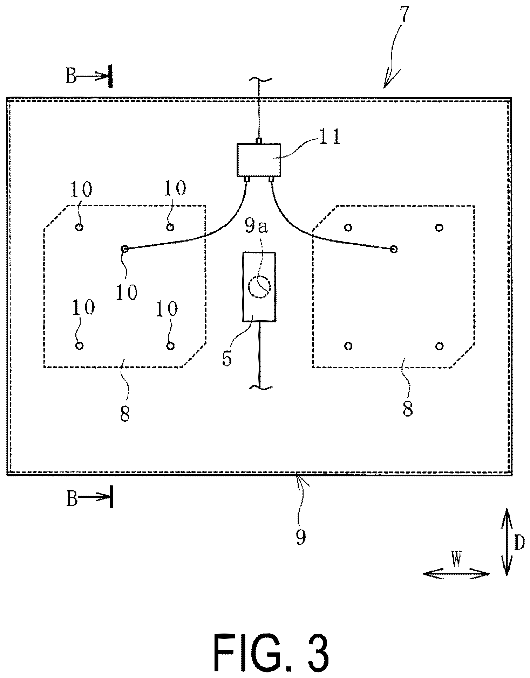

As illustrated in FIGS. 3 to 5, the antenna 7 is a two-element patch antenna including a reflector 9 and two plate-shaped antenna elements 8 arranged side by side at an interval on the lower surface of the reflector 9. The reflector 9 and each of the antenna elements 8 are made of the same material, that is, are formed from an aluminum alloy plate having a thickness of 3 mm or less. Various known aluminum alloys such as Al-Mg and Al-Mg-Si aluminum alloy plates can be used.

When the reflector 9 is rectangular as in this embodiment, the size thereof is, for example, a width dimension of 400 mm or more and 500 mm or less, a depth dimension of 300 mm or more and 480 mm or less, and a height dimension (thickness) of 0.5 mm or more and 3 mm or less. The reflector 9 is not limited to a rectangular shape, but may be of other shapes such as a square, a circle, an ellipse, and the like.

A camera through hole 9a that passes through the reflector 9 from top to bottom is formed at the center of the reflector 9 in a plan view at a position corresponding to a space between the antenna elements 8. The diameter of the camera through hole 9a is 50 mm or less, and preferably, for example, 10 mm or more and 40 mm or less. The diameter of the imaging lens of the camera device 5 is 10 mm or less. The imaging lens of the camera device 5 and the camera through hole 9a are disposed coaxially above and below each other. Therefore, the camera device 5 disposed above the reflector 9 can acquire image data below the drone 1 through the camera through hole 9a.

Each antenna element 8 has the same shape, which is a substantially rectangular shape, and notches 8a are formed at two opposing corners of the rectangle. The size of each of the substantially rectangular antenna elements 8 is, for example, a width dimension of about 30% of the width dimension of the reflector 9, a depth dimension of about 50% of the width dimension of the reflector 9, and a height dimension (thickness) of 0.5 mm or more and 3 mm or less.

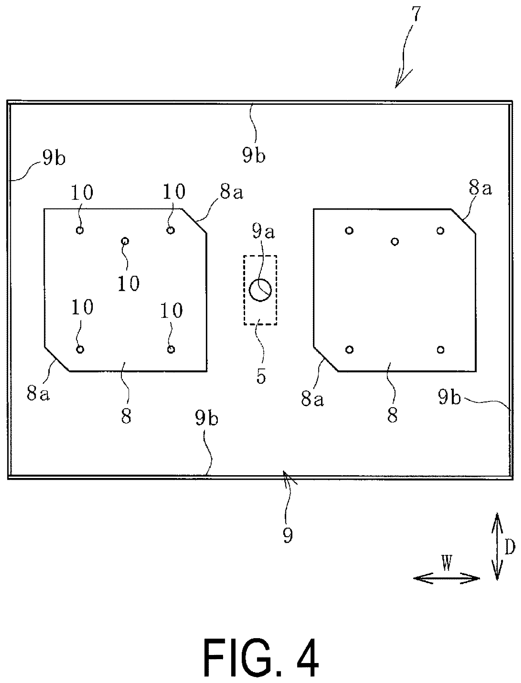

The size of the notch 8a is, for example, a C-chamfer (C-20 to C-25) of 20 mm or more and 25 mm or less. As illustrated in FIG. 4, each antenna element 8 has notches 8a at the upper right and lower left corners, but alternatively, it may have notches 8a at the upper left and lower right corners.

The respective antenna elements 8 are disposed at intervals in the width direction W. The interval between the antenna elements 8 in the width direction W (the interval between opposing sides) is, for example, 80 mm or more and 120 mm or less. The separation distance between the central positions of the respective antenna elements 8 is, for example, 240 mm or more and 260 mm or less.

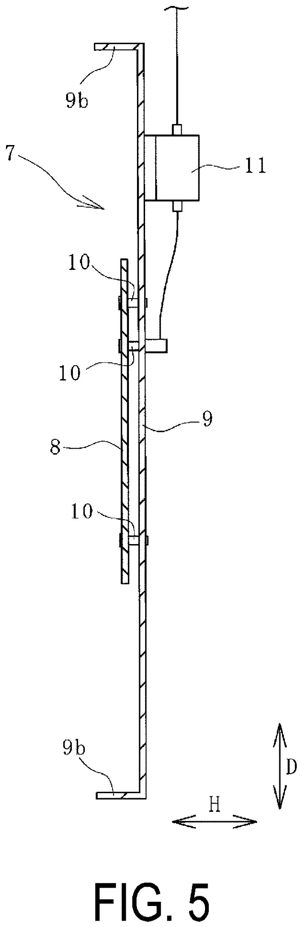

Each antenna element 8 is fixed to the reflector 9 by an insulating fixing portion 10. More specifically, as illustrated in FIG. 5, the respective antenna elements 8 and the reflector 9 are disposed with a gap therebetween by using the insulating fixing portions 10 such that no current flows between them. That is, the insulating fixing portion 10 has an insulating spacer interposed between the antenna element 8 and the reflector 9. The gap in the height direction H between each antenna element 8 and the reflector 9 is, for example, about 10 mm.

Each antenna element 8 is connected to a distributor 11 fixed to the upper surface of the reflector 9 via a conductive wire (communication cable) that passes through the inside of one insulating fixing portion 10. A communication cable connected to the main body of the communication unit 6 is connected to the distributor 11. Therefore, each antenna element 8 is electrically connected to the main body of the communication unit 6 via the distributor 11.

The reflector 9 is installed on the drone 1 such that the camera through hole 9a is located at the center of the drone 1 in a plan view. In a field of view of the drone 1 as viewed from directly below, substantially the entire range of the reflector 9 and each antenna element 8 is visible, as illustrated in FIG. 4. In other words, in this drone 1, substantially nothing is disposed at a position directly below the reflector 9 and each antenna element 8.

In order to reduce the load on the drone 1, the total mass of the reflector 9 and each antenna element 8 is preferably 1.2 kg or less, and more preferably 1.0 kg or less. It is more preferable that the total mass is 0.8 kg or less. Thus, to reduce the weight of the antenna 7, the reflector 9 and each antenna element 8 preferably have a thickness of 2 mm or less, and more preferably 1.5 mm or less. However, when the reflector 9 is made excessively thin and lightweight, its rigidity decreases and deformation such as warping occurs, and therefore the thickness is set to ensure the minimum required rigidity. Similarly, each antenna element 8 is set to a thickness that ensures the minimum required rigidity. Therefore, the thickness of the reflector 9 and each antenna element 8 is 0.5 mm or more, and more preferably 1 mm or more.

The reflector 9 has a shape in which a peripheral portion 9b thereof is bent downward. By forming the peripheral portion 9b in a shape that is bent downward, it is possible to compensate for the lack of bending rigidity that occurs when the reflector 9 is made thinner. In particular, when the thickness of the reflector 9 is 1 mm or less, it is preferable that the peripheral portion 9b is bent downward.

In this embodiment, the entire range (entire circumference) of the peripheral portion 9b is bent downward, but it is also possible to have only a portion of the peripheral portion 9b of the reflector 9, such as only the peripheral portions 9b of two opposing sides, bent downward. The bent dimension (dimension in the height direction H) of the peripheral portion 9b bent downward is, for example, 10 mm or more and 20 mm or less.

The specifications of the antenna 7 (each antenna element 8 and the reflector 9) are set within the appropriate range described above, taking into consideration improving the gain of the antenna 7 when communicating wirelessly between the antenna 7 and the IC tag 13 and reducing the weight of the antenna 7. When the antenna 7 is a one-element patch antenna having one antenna element 8, the antenna element 8 is basically disposed at the center of the reflector 9. Therefore, even though the camera through hole 9a is formed at the center of the reflector 9, it will be blocked by the antenna element 8, and therefore it is necessary to form the camera through hole 9a at a different position. However, when the camera through hole 9a is formed at a position other than the center of the reflector 9, the frequency characteristics of the antenna 7 when communicating wirelessly with the IC tag 13 will change depending on the position of the camera through hole 9a. On the other hand, it has been found that when the antenna 7 is made into a two-element patch antenna as in this embodiment and the camera through hole 9a is formed at a position corresponding to between each antenna element 8 at the center of the reflector 9, the frequency characteristics of the antenna 7 when communicating wirelessly with the IC tag 13 hardly change depending on the presence or absence of the camera through hole 9a. Therefore, in this embodiment, the antenna 7 has such specifications.

As illustrated in FIG. 6, an embodiment of the monitoring system of the present invention includes the above-mentioned drone 1, the IC tag 13 installed on the marine hose 18 which is the object to be monitored, and a computing device 12 to which monitoring data acquired from the IC tag 13 by the communication unit 6 via wireless communication is input. In this embodiment, the computing device 12 is disposed at a remote location from the place where the marine hose 18 is used, and the communication unit 6 and the computing device 12 are configured separately and independently. However, the communication unit 6 and the computing device 12 may be configured to be integrated and mounted on the drone 1.

A known computer is used as the computing device 12, and the computing device 12 performs various computing processes using input data. The computing device 12 receives, as inputs, the monitoring data acquired from the IC tag 13 by the communication unit 6 and the image data acquired by the camera device 5.

As illustrated in FIG. 6, the marine hose 18 is composed of a cylindrical hose body and connection fittings 19 connected to both ends of the hose body in the longitudinal direction. Each connection fitting 19 includes a nipple 19b extending in the longitudinal direction of the hose body and a flange 19a joined to the nipple 19b. The marine hoses 18 are connected to each other via the connection fittings 19, and usually about 10 marine hoses 18 are connected together for use.

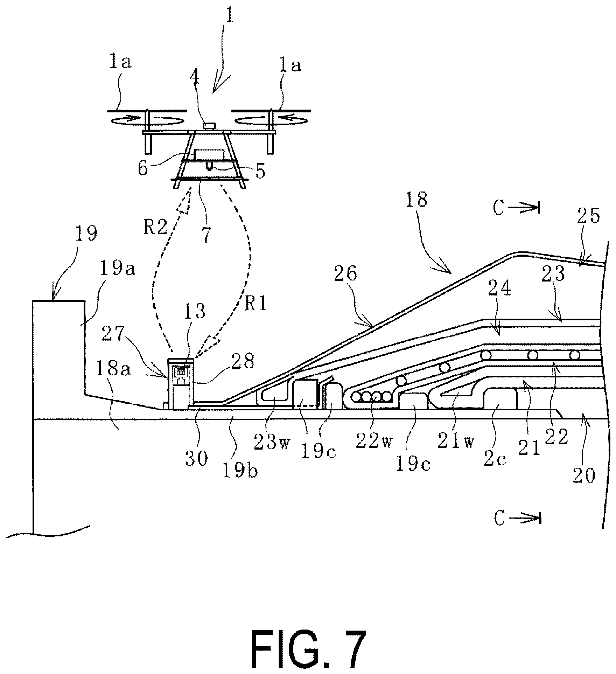

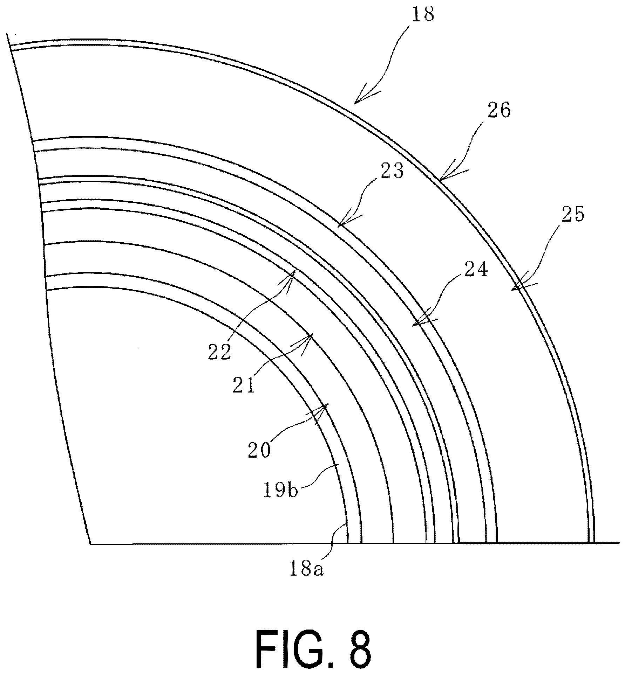

As illustrated in FIGS. 7 and 8, in the hose body of the marine hose 18, an inner surface layer 20, a first reinforcing layer 21, a body wire layer 22, a fluid retention layer 24, a second reinforcing layer 23, a buoyant layer 25, and an outer surface layer 26 are layered in order from the inner circumferential side toward the outer circumferential side. This marine hose 18 is of a double carcass type having the first reinforcing layer 21 and the second reinforcing layer 23 layered at an interval in the radial direction of the hose body with the fluid retention layer 24 interposed therebetween. The body wire layer 22 can be provided discretionarily. The region on the inner circumferential side of the inner surface layer 20 serves as a flow path 18a for a fluid L. Examples of the fluid L include crude oil, heavy oil, gasoline, LPG, water, seawater, chemicals (alcohols refined from gasoline), and the like.

The first reinforcing layer 21, the body wire layer 22, and the second reinforcing layer 23 are fixed to their respective nipples 19b at both end portions of the hose body using nipple wires 21w, 22w, and 23w at both end portions of the first reinforcing layer 21, the body wire layer 22, and the second reinforcing layer 23, fixing rings 19c protruding from the outer circumferential surfaces of the nipples 19b at both end portions of the hose body, and the like. The fluid retention layer 24 formed between the first reinforcing layer 21 and the second reinforcing layer 23 is a space for retaining the fluid L leaked from the flow path 18a.

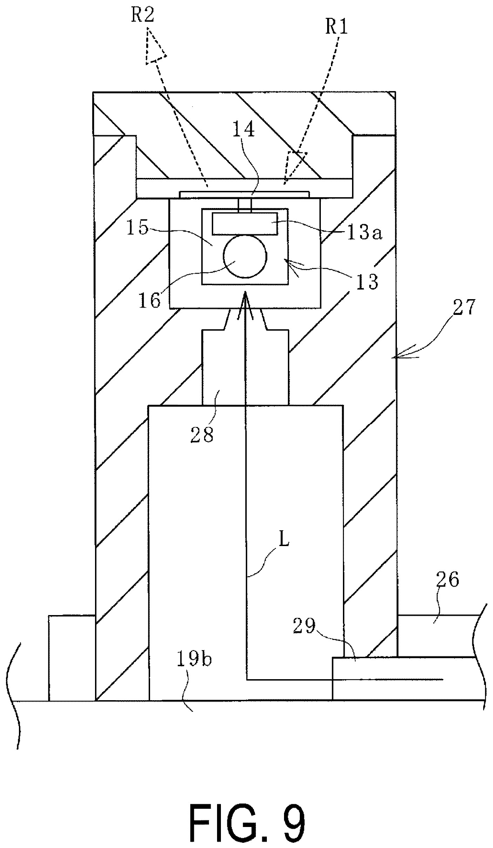

As illustrated in FIG. 9, the IC tag 13 is housed in a casing 27 erected on the surface of the marine hose 18 (on the outer circumferential surface of the nipple 19b) and is located above water. The IC tag 13 includes an IC chip 13a installed on a substrate 15, and an antenna unit 14 connected to the IC chip 13a.

The IC chip 13a optionally stores tag-specific information such as the identification number of the IC tag 13 and other necessary information. The commonly distributed specifications are employed for the IC tag 13, and for example, an RFID tag can be used. A sensor unit 16 that detects the state of the marine hose 18 is connected to the IC tag 13 (IC chip 13a). In this embodiment, a pressure sensor is used as the sensor unit 16. Although the IC chip 13a and the sensor unit 16 are suspended in FIG. 9, the IC chip 13a and the sensor unit 16 can be placed flat as the antenna unit 14.

The IC tag 13 and the sensor unit 16 are disposed in the upper space of the casing 27. A check valve 28 is provided at the bottom of this upper space. A communication pipe 29 that communicates with the fluid retention layer 24 is connected to the lower space of the casing 27. Therefore, the check valve 28 is interposed between the upper space and the lower space of the casing 27. The check valve 28 allows the flow of the fluid L and gas only into the upper space, and restricts the flow from the upper space to the lower space. Therefore, when the pressure value in the upper space increases, the pressure state is maintained. A known check valve may be used as the check valve 28. The sensor unit 16 detects the pressure value in the upper space, and the detection data is stored in the IC tag 13 (IC chip 13a).

An example of a procedure for determining the presence or absence of leakage of the fluid L in the marine hose 18 using the embodiment of the monitoring system having the drone 1 will be described below.

As illustrated in FIG. 6, the drone 1 is flown from a measurement base located, for example, on land or on a ship, and moved into the airspace above the marine hose 18. The position coordinates of the drone 1 are ascertained in real time by the GNSS receiver 4. The drone 1 can be flown to the desired position by a drone operator performing wireless control using a controller communicatively connected to the computing device 12. Inputting the position coordinates of the desired position into a control unit of the drone 1 allows the drone 1 to fly from the measurement base to the desired position by automatic control operation.

After the drone 1 is moved to the airspace above the marine hose 18, the drone 1 is moved downward to bring the communication unit 6 close to the IC tag 13 in order to perform wireless communication between the IC tag 13 and the communication unit 6. In more detail, when wireless communication is performed between the IC tag 13 and the communication unit 6, the drone operator refers to the image data (image data of the marine hose 18 in a top view) acquired in real time by the camera device 5, and positions and hovers the drone 1 such that the antenna 7 is at a position close to the IC tag 13 (antenna unit 14) (for example, within 1 m to 2 m of the IC tag 13), as illustrated in FIG. 7.

The camera through hole 9a formed at a position corresponding to between each of the antenna elements 8 at the center of the reflector 9 is located at the center of the drone 1 in a plan view. Since the camera device 5 disposed above the reflector 9 acquires image data below the drone 1 through the camera through hole 9a, the drone operator refers to this image data and this is advantageous for accurately positioning the drone 1 at an upper position close to the IC tag 13 (for example, within 1 m to 2 m of the IC tag 13) and hovering the drone 1. That is, the drone 1 may be positioned such that the IC tag 13 is located at the center of the acquired image data.

In this state in which the antenna 7 and the IC tag 13 (antenna unit 14) are brought close to each other, a transmission radio wave R1 is transmitted from the antenna 7 to the IC tag 13, as illustrated in FIG. 7. The transmission radio wave R1 received by the antenna unit 14 constituting the IC tag 13 generates electric power in the IC tag 13, and the IC tag 13 is activated. The activated IC tag 13 transmits a return radio wave R2 through the antenna unit 14 using this electric power. This return radio wave R2 is received by the antenna 7. Thus, wireless communication between the IC tag 13 and the communication unit 6 is performed by transmitting the return radio wave R2 in response to the transmission radio wave R1.

In this wireless communication, the detection data (pressure data) by the sensor unit 16 stored in the IC tag 13 is acquired by the communication unit 6. The computing device 12 uses the detection data acquired by the communication unit 6 as monitoring data, and determines the state of the marine hose 18 based on this monitoring data.

For example, the pressure value in the fluid retention layer 24 in a healthy state where the fluid L is not leaking from the flow path 18a is ascertained in advance by performing a preliminary test or the like, and set as a reference value. The computing device 12 compares the magnitude of the acquired monitoring data with a preset reference value. The computing device 12 determines that the fluid L is not leaking when the monitoring data is equal to or less than the reference value, and determines that the fluid L is leaking when the monitoring data is greater than the reference value.

As the sensor unit 16, a temperature sensor may be used in addition to or instead of the pressure sensor. By using the temperature sensor, it is possible to determine whether the inside of the marine hose 18 is overheating abnormally.

In this embodiment, the two-element patch antenna having the above-mentioned specifications is employed as the antenna 7 constituting the communication unit 6, which makes it easier to increase the wireless communication distance between the antenna 7 and the IC tag 13. In other words, the frequency characteristics of the antenna 7 when communicating wirelessly with the IC tag 13 hardly change depending on the presence or absence of the camera through hole 9a, and the antenna gain can be improved compared to a one-element patch antenna.

Furthermore, in the field of view of the drone 1 as viewed from directly below, the reflector 9 and each antenna element 8 are visible, and therefore the antenna 7 can communicate wirelessly with the IC tag 13 more stably without being obstructed by the camera device 5 or other parts of the communication unit 6. As a result, it is possible to maintain better wireless communication between the IC tag 13 and the antenna 7, which is advantageous for more reliably acquiring monitoring data indicating the state of the marine hose 18 from the IC tag 13. This is advantageous for ascertaining the state of the marine hose 18 with high accuracy.

Furthermore, the reflector 9 and each of the antenna elements 8 are formed from an aluminum alloy plate having a thickness of 3 mm or less. Therefore, by reducing the weight of the antenna 7, the load on the drone 1 is reduced and the maximum flight time of the drone 1 per flight is increased, which is advantageous for quickly performing monitoring work.

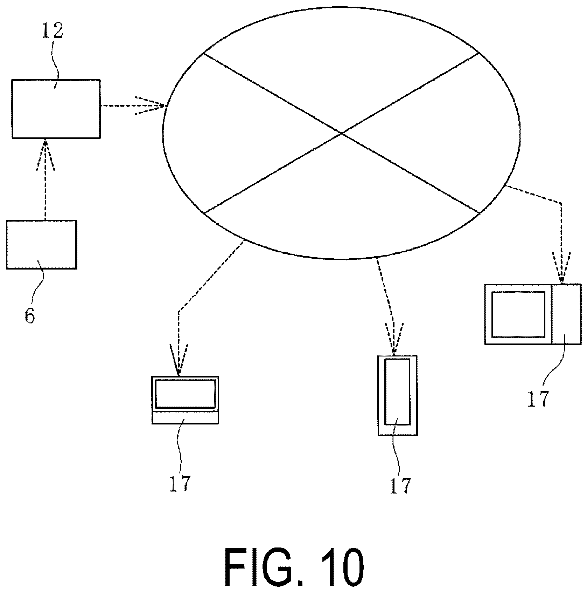

As illustrated in FIG. 10, the computing device 12 is connected to desired terminal devices 17 via a communication network such as the Internet. For example, various pieces of information (data) can be transmitted from the computing device 12 to the terminal devices 17 of relevant parties such as a control room of an operating company (user) of the marine hose 18, a sales company of the marine hose 18, or a manufacturing company, which are located remotely from the location where the marine hose 18 is used. Therefore, the computing device 12 can successively transmit the monitoring data acquired by the communication unit 6 and the results of the determination made by the computing device 12 to each of the terminal devices 17.

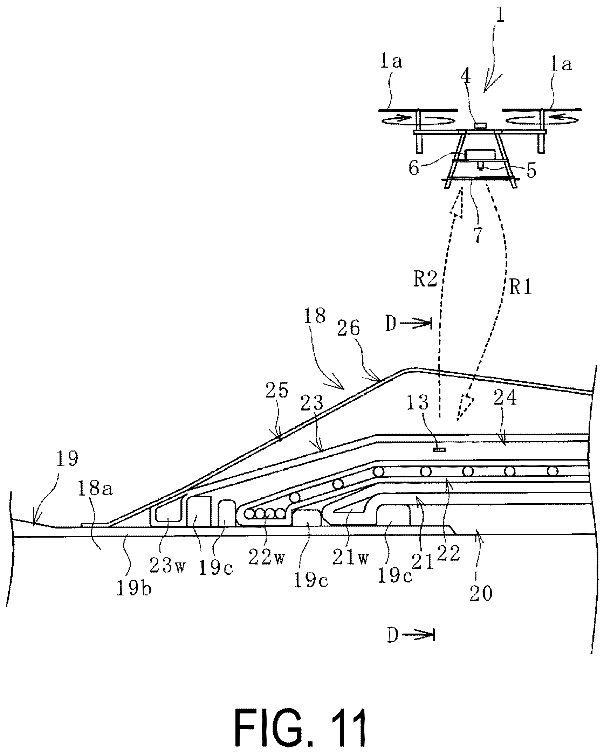

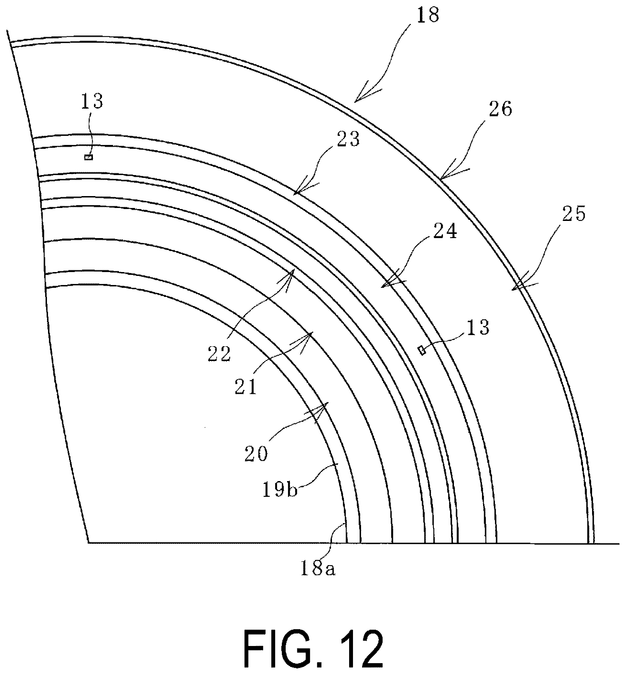

As in the embodiment of the monitoring system illustrated in FIGS. 11 and 12, the IC tag 13 can be installed in the fluid retention layer 24 at a predetermined position in the longitudinal direction of the marine hose 18. Other configurations are similar to those of the embodiments described above. The IC tag 13 is disposed in the fluid retention layer 24 in the process (molding process) of manufacturing the marine hose 18 and is fixed in the fluid retention layer 24 by vulcanization bonding or the like. The IC tag 13 is designed such that the wireless communication state (communication strength) changes when the fluid L comes into contact with the IC tag 13. A target mark indicating the location where the IC tag 13 is to be embedded is provided on the surface of the outer surface layer 26 corresponding to the location where the IC tag 13 is to be embedded.

Hereinafter, an example of a procedure for determining whether the fluid L is leaking from the flow path 18a using this monitoring system will be described.

For example, in a healthy state where no fluid L is leaking from the flow path 18a, the strength of the return radio wave R2 when wireless communication is performed between the communication unit 6 and the IC tag 13 is ascertained in advance by conducting a preliminary test, and is set as a reference value. The drone operator refers to the image data (image data of the marine hose 18 in a top view) acquired in real time by the camera device 5, and positions the drone 1 at the above-mentioned target mark and hovers it such that the antenna 7 is at a position close to the IC tag 13 (antenna unit 14), as illustrated in FIG. 11. The strength of the return radio wave R2 received during wireless communication between the communication unit 6 and the IC tag 13 during hovering is used as monitoring data. The computing device 12 then compares the magnitude of the acquired monitoring data with a preset reference value, and determines whether there is leakage of the fluid L based on the comparison result.

The reflector 9 may be designed such that, separately from the camera through hole 9a, a large number of ventilation holes penetrating vertically are formed therein. It is advisable to disperse a large number of ventilation holes in the reflector 9 within a range that ensures the minimum required rigidity of the reflector 9. By forming a large number of ventilation holes in the reflector 9, the air resistance received by the reflector 9 while the drone 1 is flying or hovering can be reduced. This is advantageous for accurately moving the drone 1 to a desired position and hovering it. The power consumption by the drone 1 is reduced, which is also advantageous for increasing the maximum flight time of the drone 1 per flight.

The object to be monitored is not limited to the marine hose 18, and examples thereof include a conveyor belt, a pneumatic fender, and an extra-large tire for a construction vehicle. As in the embodiment described above, the communication unit 6 mounted on the drone 1 is used to ascertain the state of the objects to be monitored based on monitoring data acquired from the passive IC tag 13 installed on these objects to be monitored.

Furthermore, the present invention can be used not only to ascertain the state of an object to be monitored in use, but also to ascertain the state of an object to be monitored stored in a warehouse, a factory, or the like. In other words, the present invention can be applied for the purpose of inventory management of objects to be monitored, and the temperature, internal pressure, and the like of objects to be monitored being stored can be ascertained.

### Reference Signs List

1 Drone
1a Propeller
2a, 2b, 2c Support body
3 Leg portion
4 GNSS receiver
5 Camera device
6 Communication unit
7 Antenna
8 Antenna element (patch)
8a Notch
9 Reflector
9a Camera through hole
9b Peripheral portion
10 Insulating fixing portion
11 Distributor
12 Computing device
13 IC tag
13a IC chip
14 Antenna unit
15 Substrate
16 Sensor unit
17 Terminal device
18 Marine hose (object to be monitored)
18a Flow path
19 Connection fitting
19a Flange
19b Nipple
19c Fixing ring
20 Inner surface layer
21 First reinforcing layer
21w Nipple wire
22 Body wire layer
22w Nipple wire
23 Second reinforcing layer
23w Nipple wire
24 Fluid retention layer
25 Buoyant layer
26 Outer surface layer
27 Casing
28 Check valve
29 Communication pipe

## Claims

1. A drone comprising a camera device and a communication unit equipped with an antenna used for wireless communication with a passive IC tag installed on an object to be monitored,
the antenna being a two-element patch antenna comprising a reflector and two antenna elements, the antenna elements being plate-shaped and arranged side by side at an interval on a lower surface of the reflector,
the reflector and each of the antenna elements being formed from an aluminum alloy plate having a thickness of 3 mm or less,
a camera through hole being formed at a position corresponding to between each of the antenna elements at a center of the reflector,
the reflector being installed on the drone such that the camera through hole is located at a center of the drone in a plan view, and the reflector and each of the antenna elements being visible in a field of view of the drone as viewed from directly below, and
the camera device being disposed above the reflector, and image data below the drone being acquired by the camera device through the camera through hole.

2. The drone according to claim 1, wherein a total mass of the reflector and each of the antenna elements is 1.2 kg or less.

3. The drone according to claim 1 or 2, wherein the reflector has a shape in which a peripheral portion of the reflector is bent downward.

4. The drone according to any one of claims 1 to 3, wherein a large number of ventilation holes penetrating vertically are formed in the reflector, separately from the camera through hole.

5. A monitoring system comprising:
the drone according to any one of claims 1 to 4;
the IC tag installed on the object to be monitored; and
a computing device to which monitoring data acquired by the communication unit from the IC tag via wireless communication is input,
the IC tag storing detection data by a sensor unit that detects a state of the object to be monitored,
the detection data acquired by the communication unit from the IC tag via wireless communication being used as the monitoring data, and
the computing device determining the state of the object to be monitored based on the monitoring data.

6. The monitoring system according to claim 5, wherein the object to be monitored is a marine hose.

7. A monitoring method using the drone according to any one of claims 1 to 4, the IC tag installed on the object to be monitored, and a computing device to which monitoring data acquired by the communication unit from the IC tag via wireless communication is input, the monitoring method comprising:
detecting a state of the object to be monitored by a sensor unit installed on the object to be monitored;
storing detection data by the sensor unit in the IC tag;
acquiring the detection data by the communication unit from the IC tag via wireless communication; and
determining the state of the object to be monitored by the computing device based on the monitoring data by using the detection data as the monitoring data.
